Europäisches Patentamt

European Patent Office

Office européen des brevets

(11) Publication number: **0 088 573**
**B1**

# EUROPEAN PATENT SPECIFICATION

(45) Date of publication of patent specification: **05.06.85**

(21) Application number: **83301065.5**

(22) Date of filing: **28.02.83**

(51) Int. Cl.⁴: **A 23 K 1/18,** A 23 P 1/00

(54) **Animal foodstuff.**

(30) Priority: **05.03.82 GB 8206527**

(43) Date of publication of application:
**14.09.83 Bulletin 83/37**

(45) Publication of the grant of the patent:
**05.06.85 Bulletin 85/23**

(84) Designated Contracting States:
**BE DE FR GB IT NL SE**

(56) References cited:
**FR-A-2 274 233**
**GB-A-1 433 657**
**US-A-3 764 715**
**US-H- 478 759**

(73) Proprietor: **Quaker France S.A.**
**40 boulevard de Dunkerque**
**F-13002 Marseille (FR)**

(72) Inventor: **Smith, John Royston**
**3, Battlemead Close**
**Maidenhead Berkshire (GB)**
Inventor: **Fischer, Gerhard Otto Josef**
**"Cheam" Gold Hill East**
**Gerrards Cross Buckinghamshire (GB)**

(74) Representative: **Clifford, Frederick Alan et al**
**MARKS & CLERK 57/60 Lincoln's Inn Fields**
**London WC2A 3LS (GB)**

## Description

This invention relates to foodstuffs for animals and particularly although not exclusively to dog food.

Dog food is available as moist, semi-moist or dry dog food. The first category is usually (not invariably) canned. Dry dog food, however, is cheaper to make and store, and is usually sold in packets or sacks as hard biscuit-like lumps.

These hard lumps, although compounded from milled cereals and proteinaceous meal to be a complete food, have certain disadvantages. Thus, they are not always suitable for small dogs or older dogs with deteriorating teeth, since they require some force to break them into suitable fragments for swallowing.

The present invention is based on the realisation that it is possible to fabricate a dry animal food of sufficient internal cohesion that lumps of the food can be handled and stored, but of sufficient breakability that even smaller animals can break it apart in their jaws.

In one aspect the invention provides an animal food consisting of units of a dry formulation comprising a cereal component and a combined or separate proteinaceous component, each unit being shaped as a plurality of side-by-side, contacting and mutually adherent strands, wherein breakage of the unit involves both separation and transverse breakage of the strands.

Neither the force required for strand separation, nor the force required to break a strand transversely is as great as the force required to break a lump of such material of the same overall dimensions. This gives the food a "crispy" nature, particularly suitable for, although of course not limited to, formulations for smaller animals. Thus, although the product of the invention is preferably formulated as a dog-food, especially for smaller dogs, it can also be used for cat foods, or foods or food supplements for farm animals, or for menagerie feeding stuffs, or for foodstuffs for animals in research establishments.

The strands comprising the unit can have various inter-relationships. For example, they can be identical parallel strands, each adhered to its neighbours along a major proportion, or essentially all, of its length. Alternatively, they can be spaced apart over a significant proportion of their length, but adherent at specific locations, e.g. at the ends. A combination of the above characteristics, i.e. with two or more mutually adherent bundles or layers of strands defining one or more spaces between the bundles or layers could also be used. The strands are preferably all of the same transverse dimension, but could, if desired, differ; moreover, strands of different composition, or colour, could be present in the unit. The total number of strands can vary widely, for example from 3 to 100, but is usually about 10—20. The transverse dimension of each strand will vary with the number present, and the desired size of each unit of foodstuff, but is usually from 1 to 10 mm, e.g. 2—3 mm.

The units themselves can be of any desired overall shape. Usually, the shape is affected to some extent by the requirements of a convenient process of manufacture in bulk. One preferred process, described in more detail below, involves continuous extrusion of parallel strands. Thus, simple bars or lumps cut from adherent parallel strands can be envisaged. It is preferred for the units each to have a generally square or rectangular appearance, for example somewhat pillow-shaped or cushion-shaped with parallel cut and pressed-together edges where the strands are in stronger adhesive contact separated by a central zone in which strands are in less strong, or possibly no, adhesive contact. A generally square unit of 2—3 cm edge length is preferred. The proportions of such units can also vary, but for the preferred generally square cushion-shaped unit the maximum overall thickness can be for example from 1/4 to 2/3 the edge length, usually about half.

The animal food formulation can also vary widely in its proportions, as between the components. Usually the proportions as between the cereal and the proteinaceous component lie between 30:70 (e.g. 50:50) and 80:20 (e.g. 95:5). The cereal component usually predominates, and is most often a wheat flour, although flour from other cereals (oats, maize, rye, etc.) could be used. Additionally or alternatively the proteinaceous component can comprise animal protein and/or vegetable protein, e.g. meat meal, fish meal, meat-and-bone meal, etc. from a wide variety of sources, and is usually in predominant admixture with a vegetable protein such as soya flour.

If there are internal spaces in the unit they increase the bulk volume of the product so that volume for volume it can be less expensive than prior art products.

In another aspect the invention provides a method for the production of an animal food as described above, which includes the steps of: making up an animal food formulation including a cereal component, a proteinaceous component and enough water to give an extrudable consistency; extruding the moist formulation through a plurality of adjacent orifices to produce a like plurality of extruded strands; passing the plurality of strands progressively into pressure and severing means, whereby there are severed from the strands moist coherent units each consisting of a plurality of identical strand lengths pressed together at the free ends; and drying or cooking the units so as to produce crisp coherent but breakable units of animal food.

The preferred features of the method will be largely apparent from the above discussion. It will be found convenient for the strands to be extruded vertically downwards into pressure and severing means constituted by opposed pairs of blades protruding from two parallel rollers; in such a case the strand extrusion speed will generally match the roller peripheral speed.

The design of extrusion head can vary depending upon the desired product, giving the possibility of using interchangeable heads if desired. For example, a cluster of orifices arranged in a hexagonal pattern, or spaced parallel rows of orifices, or a circle of orifices can all be used. It is valuable in some instances so to relate the orifice size and spacing with the pressure of extrusion that "die swell", as the moist formulation emerges, brings strands into initial contact with their neighbours prior to pressure and severing.

The invention will be further described with reference to the accompanying drawings, in which:

Figure 1 is a general view of a unit of dry animal food according to the invention;

Figure 2 shows a section along II—II of Figure 1;

Figure 3 shows a section along III—III of Figure 1;

Figures 4a, 4b and 4c show typical arrangements of orifices for strand extrusion; and

Figure 5 shows diagrammatically how such units of food may be produced.

A unit 1 of animal food (whereof the solids content consists for example maize flour (43.5 parts by weight), wheat flour (28.5 parts by weight), greaves meal (19.5 parts by weight) and soya flour (5 parts by weight) with the addition of suitable dyestuffs, vitamins, mineral, vegetable flavourings, and salts (total 3.5 parts by weight), and which in its dried form includes 10% by total weight of water) is of a generally square cushion-shape with two parallel straight pressured edges 2 and 3. ("Greaves" are the residual parts of waste meat from which the fat has been rendered). The unit 1 comprises individual strands 4, adhered along their lengths and more closely adhered at 2 and 3 by the effect of the pressure.

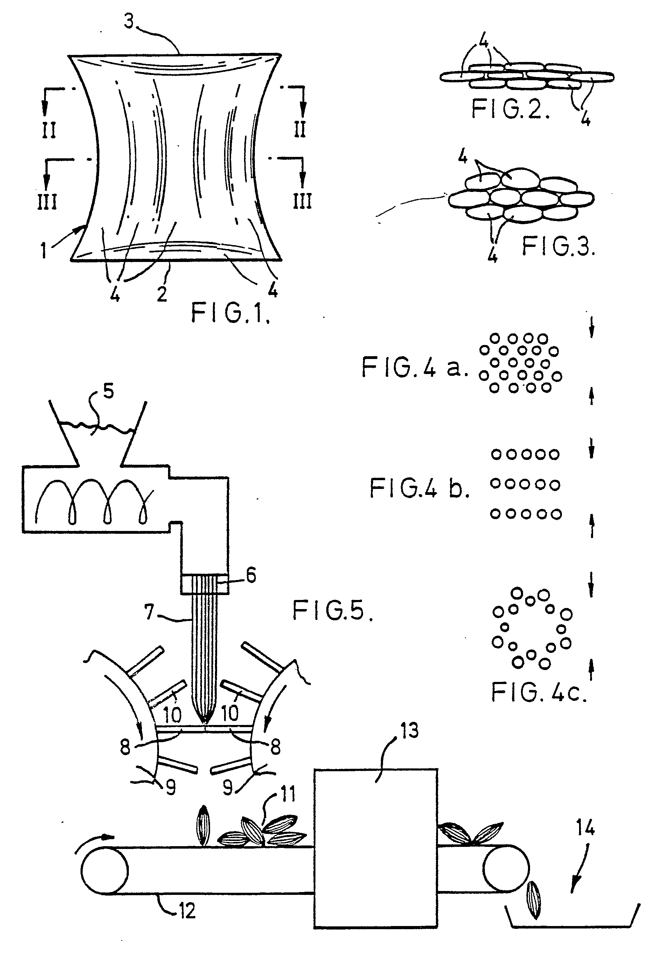

As shown in Figures 2 and 3, the cross-sections of the unit show strands more or less distorted in transverse section, and occupying a progressively more flattened unit profile towards the ends 2 and 3.

This product can be made by extruding a moist mix (e.g. of 30% total water) through a plurality of orifices as shown in Figures 4a, 4b and 4c. The size and spacing of the orifices governs the amount of internal cohesion and void space in units made by pressing and severing in the direction of the arrows in those Figures.

As shown in Figure 5, the moist mix 5 is extruded under elevated temperature (ca. 100°C) and pressure through orifices at 6 to form vertical parallel strands. Some flash evaporation of water, reducing water content from say 30% to 23%, usually takes place at this stage. These strands 7 pass into the meeting line of opposed blades 8, mounted on co-rotating rollers 9. As these rotate, blades 10 press and sever the strands at a different location (higher in relation to the strands). The strands are extruded at the roller blade edge peripheral speed. A succession of units generally as in Figure 1 accumulates at 11 on conveyor 12 by which they pass through oven 13 to be dried to the desired 10% water content and accumulate at 14 as product.

Swell of strands at the die orifices can ensure some prior adhesion of the strands before pressing and severing.

## Claims

1. An animal food consisting of units of a dried formulation comprising a cereal component and a combined or separate proteinaceous component, characterised in that each unit is shaped as a plurality of side-by-side, contacting, and mutually adherent strands, wherein breakage of the unit involves both separation and transverse breakage of the strands.

2. An animal food as claimed in claim 1 characterised in that the strands are identical and parallel and each strand is adhered to its neighbours along at least a major proportion of its length.

3. An animal food as claimed in claim 1 characterised in that the strands are spaced apart over a significant proportion of their length, but each strand is adhered to its neighbours at its end portions.

4. An animal food as claimed in claim 1, characterised in that the strands are arranged as two or more mutually adherent bundles or layers of strands defining one or more spaces between the bundles or layers.

5. An animal food as claimed in any one preceding claim characterised in that strands of different composition and/or colour are present in the unit.

6. An animal food as claimed in any one preceding claim, characterised in that there are from 10 to 20 strands in each unit.

7. An animal food as claimed in any one preceding claim, characterised in that each strand is from 2 to 3 mm in diameter.

8. An animal food as claimed in any one preceding claim, characterised in that each unit is rectangular and cushion-shaped with parallel cut and pressed-together edges where the strands are in stronger adhesive contact separated by a central zone in which the strands are in less strong or no adhesive contact.

9. An animal food as claimed in claim 8, characterised in that each unit is generally square, has an edge of 2 to 3 cm, and a maximum overall thickness from $\frac{1}{4}$ to 2/3 the edge length.

10. An animal food as claimed in any one preceding claim, characterised in that the formulation contains from 30 to 95% by weight of a cereal component consisting of one or more of wheat flour, oat flour, maize flour, and rye flour and correspondingly from 70 to 5% by weight of a proteinaceous component consisting of one or more of animal protein meal and vegetable protein meal.

11. An animal food as claimed in claim 10, characterised in that the proteinaceous component comprises a major proportion of one or more of meat meal, fish meal, and meat-and-bone meal and a minor proportion of soya flour.

12. A method for the production of an animal food as claimed in any one preceding claim, characterised in that it includes the steps of:

(a) making up an animal food formulation including the cereal component, the proteinaceous component, and enough water to give an extrudable consistency;

(b) extruding the moist formulation through a plurality of adjacent orifices to produce a like plurality of extruded strands;

(c) passing the plurality of strands progressively into pressure and severing means, whereby there are severed from the strands moist coherent units each consisting of a plurality of identical strand lengths pressed together at the free ends; and

(d) drying or cooking the units so as to produce a crisp coherent but breakable units of animal food.

13. A method as claimed in claim 11 characterised in that the strands are extruded vertically downwards into a pressure and severing means constituted by opposed pairs of blades protruding from parallel rollers of peripheral speed generally equal to that of the speed of movement of the extruded tube.

14. A method as claimed in claim 12 or 13, characterised in that the orifices are arranged in a hexagonal pattern, or as spaced parallel rows, or as a circle of orifices.

15. A method as claimed in any of claims 12 to 14, characterised in that the orifice size and spacing are related with the pressure of extrusion that die swell as the moist formulation emerges, brings strands into initial contact with their neighbours prior to pressure and severing.

**Patentansprüche**

1. Futtermittel, bestehend aus Einheiten einer getrockneten Zubereitung aus einer Getreidekomponente und einer kombinierten oder getrennten Proteinkomponente, dadurch gekennzeichnet, daß jede Einheit als aus mehreren, einander seitlich berührenden und wechselweise aneinander haftenden Strängen geformt ist, wobei das Brechen der Einheit sowohl das Trennen voneinander als auch das Querbrechen der Stränge bewirkt.

2. Futtermittel nach Anspruch 1, dadurch gekennzeichnet, daß die Stränge untereinander gleich und parallel sind und jeder Strang an den ihm benachbarten Strängen zumindest auf dem größten Teil seiner Länge haftet.

3. Futtermittel nach Anspruch 1, dadurch gekennzeichnet, daß die Stränge auf einem nennenswerten Bereich ihrer Länge einen Abstand voneinander aufweisen und jeder Strang im Bereich seiner Enden an den ihm benachbarten Strängen haftet.

4. Futtermittel nach Anspruch 1, dadurch gekennzeichnet, daß die Stränge zu zwei oder mehr wechselweise aneinander haftenden Bündeln oder Schichten mit ein oder mehr Zwischenräumen zwischen den Bündeln oder Strängen zusammengefaßt sind.

5. Futtermittel nach einem der vorangehenden Ansprüche, dadurch gekennzeichnet, daß innerhalb einer Einheit Stränge verschiedener Zusammensetzung und/oder Farbe vorhanden sind.

6. Futtermittel nach einem der vorangehenden Ansprüche, dadurch gekennzeichnet, daß jede Einheit zwischen 10 und 20 Stränge aufweist.

7. Futtermittel nach einem der vorangehenden Ansprüche, dadurch gekennzeichnet, daß jeder Strang einen Durchmesser zwischen 2 und 2 mm aufweist.

8. Futtermittel nach einem der vorangehenden Ansprüche, dadurch gekennzeichnet, daß jede Einheit rechteckig und kissenförmig mit parallel geschnittenen und zusammengepreßten Kanten, an denen die Stränge in stärkerem Haftkontakt stehen und die durch eine mittlere Zone mit einem weniger starken oder gar keinem Haftkontakt getrennt sind, ausgebildet sind.

9. Futtermittel nach Anspruch 8, dadurch gekennzeichnet, daß jede Einheit im wesentlichen quadratisch mit einer Kantenlänge von 2 bis 3 cm und einer Gesamtdicke von 1/4 bis 2/3 der Kantenlänge ausgebildet ist.

10. Futtermittel nach einem der vorangehenden Ansprüche, dadurch gekennzeichnet, daß die Zubereitung aus 30 bis 95 Gew.% einer Getreidekomponente, z.B. Getreide- und/oder Hafer- und/oder Mais- und/oder Roggenmehl, sowie 70 bis 5 Gew.% einer Proteinkomponente, z.B. tierischem und/oder pflanzlichem Proteinmehl.

11. Futtermittel nach Anspruch 10, dadurch gekennzeichnet, daß die Proteinkomponente einen größeren Anteil von Fleischmehl und/oder Fischmehl und/oder Fleisch- und Knochenmehl und einen kleineren Anteil an Soyamehl aufweist.

12. Verfahren zur Herstellung eines Futtermittels nach einem der vorangehenden Ansprüche, dadurch gekennzeichnet, daß es folgende Stufen einschließt:

a) Herstellen einer Futtermittel-Zubereitung aus der Getreidekomponente, der Proteinkomponente und einer für eine extrudierfähige Konsistenz ausreichenden Menge an Wasser;

b) Extrudieren der feuchten Zubereitung durch eine Mehrzahl benachbarter Öffnungen zur Erzeugung einer entsprechenden Anzahl von extrudierten Strängen;

c) Fortschreitendes Zuführen der Mehrzahl von Strängen zu Press- und Trennmitteln, wodurch von den Strängen durch Feuchtigkeit zusammenhängende Einheiten abgetrennt werden, die jede aus mehreren gleichen und an den freien Enden zusammengepreßten Strangabschnitten besteht und

d) Trocknen oder Kochen der Einheiten zur Erzeugung knuspriger, zusammenhängender, aber brechfähiger Einheiten eines Futtermittels.

13. Verfahren nach Anspruch 12, dadurch gekennzeichnet, daß die Stränge vertikal nach unten in Press- und Trennmittel extrudiert werden, die aus gegenüberliegenden, an parallelen Rollen vorragenden Messerpaaren gebildet sind, deren Umfangsgeschwindigkeit im wesentlichen gleich der Bewegungsgeschwindigkeit der extrudierten Stränge ist.

14. Verfahren nach Anspruch 12 oder 13, dadurch gekennzeichnet, daß die Öffnungen in einer hexagonalen oder parallel gereihten oder kreisförmigen Anordnung vorgesehen sind.

15. Verfahren nach einem der Ansprüche 12 bis 14, dadurch gekennzeichnet, daß Größe und Abstand der Öffnungen so in Abhängigkeit zum Extrusionsdruck gebracht werden, daß beim Austritt der feuchten Zubereitung durch das Entspannen ein Aufquellen stattfindet, das die Stränge mit den jeweils benachbarten Strängen vor dem Pressen und Trennen in Berührung bringt.

**Revendications**

1. Aliment pour animaux se composant d'unités d'une composition séchée comprenant un composant à base de céréales et un composant protéiné combiné ou séparé, caractérisé par le fait que chaque unité se présente sous la forme d'une pluralité de brins se touchant côte-à-côte et mutuellement adhérents, le bris de l'unité impliquant à la fois une séparation et un bris transversal des brins.

2. Aliment pour animaux selon la revendication 1, caractérisé par le fait que les brins sont identiques et parallèles, et que chaque brin est collé à ses voisins le long d'au moins une partie majeure de sa longueur.

3. Aliment pour animaux selon la revendication 1, caractérisé par le fait que les brins sont espacés les uns des autres sur une partie importante de leur longueur, mais chaque brin est collé à ses voisins par ses extrémités.

4. Aliment pour animaux selon la revendication 1, caractérisé par le fait que les brins sont disposés sous la forme de deux, ou plus, faisceaux ou couches mutuellement adhérents de brins délimitant un ou plusieurs espaces entre les faisceaux ou les couches.

5. Aliment pour animaux selon l'une des revendications précédentes, caractérisé par le fait qu'il y a dans l'unité des brins de composition et/ou de couleur différentes.

6. Aliment pour animaux selon l'une des revendications précédentes, caractérisé par le fait qu'il y a de 10 à 20 brins dans chaque unité.

7. Aliment pour animaux selon l'une des revendications précédentes, caractérisé par le fait que chaque brin a un diamètre de 2 à 3 mm.

8. Aliment pour animaux selon l'une des revendications précédentes, caractérisé par le fait que chaque unité est rectangulaire et en forme de coussin avec des bords découpés parallèles et comprimés les uns contre les autre où les brins sont en contact adhérent plus étroit, séparés par une zone centrale dans laquelle les brins sont en contact adhérent moins étroit ou bien ne sont pas en contact adhérent du tout.

9. Aliment pour animaux selon la revendication 8, caractérisé par le fait que chaque unité est de forme générale carrée, a un bord de 2 à 3 cm, et une épaisseur hors tout maximale représentant de 1/4 à 2/3 de la longueur du bord.

10. Aliment pour animaux selon l'une des revendications précédentes, caractérisé par le fait que la composition contient de 30 à 95 % en poids d'un composant à base de céréales consistant en une ou plusieurs substances choisies parmi la farine de blé, la farine d'avoine, la farine de maïs et la farine de seigle, et, de manière correspondante, de 70 à 5 % en poids d'un composant protéiné consistant en une ou plusieurs substances choisies parmi les farines de protéines animales et les farines de protéines végétales.

11. Aliment pour animaux selon la revendication 10, caractérisé par le fait que le composant protéiné comprend une proportion majeure d'une ou plusieurs substances choisies parmi la farine de viande, la farine de poisson et la farine de viande et de poisson, et une proportion mineure de farine de soja.

12. Procédé de fabrication d'un aliment pour animaux tel que revendiqué à l'une des revendications précédentes, caractérisé par le fait qu'il comprend les étapes consistant à:

a) constituer une composition d'aliment pour animaux comprenant le composant à base de céréales, le composant protéiné, et assez d'eau pour lui donner une consistance extrudable;

b) extruder cette composition humide à travers une pluralité d'orifices adjacents de façon à former un nombre correspondant de brins extrudés;

c) faire passer progressivement la pluralité de brins dans des moyens de compression et de sectionnement, pour qu'il soit formé, à partir des brins, des unités cohérentes humides se composant chacune d'une pluralité de longueurs identiques de brins comprimées les unes contre les autres à leurs extrémités libres; et

d) sécher ou cuire les unités de façon à former des unités craquantes, cohérentes mais cassables, d'aliments pour animaux.

13. Procédé selon la revendication 11, caractérisé par le fait que les brins sont extrudés verticalement vers le bas dans un moyen de compression et de sectionnement qui est constitué par des paires opposées de lames faisant saillie de cylindres parallèles dont la vitesse périphérique est généralement égale à la vitesse de déplacement du tube extrudé.

14. Procédé selon la revendication 12 ou 13, caractérisé par le fait que les orifices sont disposés en hexagone, ou bien sous la forme de rangées parallèles espacées, ou encore sous la forme d'un cercle d'orifices.

15. Procédé selon l'une des revendications 12 à 14, caractérisé par le fait que la taille et l'espacement des orifices sont liés à la pression d'extrusion de telle sorte que le gonflement de filière, à mesure que la composition humide sort de l'appareil, fasse venir les brins en contact initial avec leurs voisins avant la compression et le sectionnement.

FIG.1.

FIG.2.

FIG.3.

FIG.4 a.

FIG.4 b.

FIG. 4c.

FIG.5.